(19) Europäisches Patentamt / European Patent Office / Office européen des brevets

(11) **EP 2 059 052 A1**

(12) **EUROPÄISCHE PATENTANMELDUNG**

(43) Veröffentlichungstag:
**13.05.2009 Patentblatt 2009/20**

(51) Int Cl.:
***H04N 7/26*** *(2006.01)*

(21) Anmeldenummer: **08018113.4**

(22) Anmeldetag: **16.10.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **25.10.2007 DE 102007051174**

(71) Anmelder: **Micronas GmbH**
**79108 Freiburg (DE)**

(72) Erfinder:
• **Rieder, Peter**
**81737 München (DE)**
• **Scheffler, Günter**
**80939 München (DE)**
• **Tuschen, Christian**
**80687 München (DE)**
• **Hahn, Marko**
**85579 Neubiberg (DE)**
• **Schu, Markus**
**85435 Erding (DE)**

(74) Vertreter: **Patentanwälte**
**Westphal, Mussgnug & Partner**
**Herzog-Wilhelm-Strasse 26**
**80331 München (DE)**

(54) **Verfahren zur Bewegungsschätzung in der Bildverarbeitung**

(57) Beschrieben wird ein Verfahren zur Auswahl eines Bewegungsvektors zu einem ersten Bildblock eines Bildes einer Bildfolge aus einer Anzahl von Testvektoren, wobei wenigstens einer dieser Testvektoren ein Bewegungsvektor eines weiteren Bildblockes ist, der zeitlich und/oder räumlich benachbart zu dem ersten Bildblock angeordnet ist, oder ein durch Modifikation dieses Bewegungsvektors gebildeter Vektor ist und wobei das Verfahren aufweist:

Ermitteln eines Abstandsmaßes zu jedem Testvektor, Ermitteln einer Vektorlänge der Testvektoren und Ermitteln des Testvektors mit der kürzesten Vektorlänge oder einer ersten Untergruppe von Testvektoren mit den im Vergleich zu den übrigen Testvektoren kürzesten Vektorlängen,

Ermitteln eines modifizierten Abstandsmaßes zu dem kürzesten Testvektor oder zu den Testvektoren der Untergruppe abhängig von dem zu dem jeweiligen Testvektor ermittelten Abstandsmaß und abhängig von einem Längenmaß,

Vergleichen des modifizierten Abstandsmaßes des kürzesten Bewegungsvektors oder der modifizierten Abstandsmaße der Testvektoren der ersten Untergruppe mit den Abstandsmaßen der übrigen Testvektoren und Auswählen eines der Testvektoren abhängig von diesem Vergleich.

FIG 2

Auswahl von Testvektoren ($t1$, ..., $tn$), denen jeweils ein Signifikanzmaß ($S1$, ..., $Sn$) zugeordnet ist — 11

Ermitteln von Abstandsmaßen ($D1$, ..., $Dn$) zu den Testvektoren ($t1$, ..., $tn$) — 12

Ermitteln modifizierter Abstandsmaße ($D'1$, ..., $D'n$) abhängig von den Abstandsmaßen ($D1$, ..., $Dn$) und den Signifikanzmaßen ($S1$, ..., $Sn$) — 13

Auswahl eines der Testvektoren ($t1$, ..., $tn$) als Bewegungsvektor ($v$) abhängig von den modifizierten Abstandsmaßen ($D'1$, ..., $D'n$) — 14

Anpassen des Signifikanzmaßes des Bewegungsvektors für eine nächste Bewegungsschätzung — 15

EP 2 059 052 A1

**Beschreibung**

Die Erfindung betrifft ein Verfahren zur Bewegungsschätzung, genauer ein Verfahren zur Auswahl eines einem Bildbereich zugeordneten Bewegungsvektors aus einer Anzahl von Test(bewegungs)vektoren.

In der Bildverarbeitung ist es bekannt, aufeinanderfolgende Bilder einer Bildfolge in Bildbereiche oder Bildblöcke zu unterteilen und zu einzelnen dieser Bildblöcke jeweils einen Bewegungsvektor zu ermitteln. Ein einem Bildblock zugeordneter Bewegungsvektor enthält hierbei eine Information über eine räumliche Verschiebung des Bildinhalts des jeweiligen Blocks von einem momentanen Bild zu einem zeitlich vorausgehenden oder zeitlich nachfolgenden Bild.

Eine solche durch einen Bewegungsvektor repräsentierte Bewegungsinformation kann beispielsweise bei prädiktiven Codierverfahren wie MPEG-2 oder H263, die zur Datenkompression verwendet werden, eingesetzt werden. Anstatt einen Bildblock gleichen Inhaltes, der sich in aufeinanderfolgenden Bildern wiederfindet, für jedes Bild zu codieren, wird bei diesen Verfahren nur einmal der Bildinhalt und zusätzlich die Bewegungsinformation codiert. Aus diesen einmal codierten Bilddaten und den zusätzlich codierten Bewegungsdaten lässt sich die ursprüngliche Bildfolge wieder rekonstruieren.

Die durch einen Bewegungsvektor repräsentierte Bewegungsinformation kann außerdem für die Interpolation eines oder mehrerer Zwischenbilder erzeugt werden, die zeitlich zwischen Originalbildern einer Bildfolge angeordnet sind. Die Bewegungsinformation wird hierbei verwendet, um sich bewegende Objekte bewegungsrichtig in den Zwischenbildern darzustellen, d.h. um das Objekt an einer Position in dem Zwischenbild darzustellen, die zwischen den Positionen des Objekts in den Originalbildern liegt.

Ein mögliches Verfahren zur Ermittlung solcher Bewegungsvektoren ist das sogenannte Blockmatching-Verfahren, das beispielsweise in Schröder, H.; Blume, H.: "Mehrdimensionale Signalverarbeitung", Band 2, ISBN 3-519-06197-X, Seite 259-266 beschrieben ist. Bei diesem Verfahren wird das aktuelle Bild einer Bildfolge in eine Anzahl gleich großer Blöcke unterteilt. Zu jedem dieser Blöcke wird dann im vorherigen oder nachfolgenden Bild der Block gesucht, dessen Bildinhalt die größte Übereinstimmung mit dem Inhalt des jeweiligen Blockes des aktuellen Bildes aufweist. Der Verschiebungsvektor zwischen diesem Block des aktuellen Bildes und dem Block des vorherigen oder nachfolgenden Bildes, der die größten Übereinstimmungen mit diesem Block des aktuellen Bildes aufweist, bildet dann den Bewegungsvektor zu diesem Block des aktuellen Bildes.

Beim sogenannten Full-Search-Algorithmus wird hierbei jeder Block des aktuellen Bildes mit jedem Block des vorherigen oder nachfolgenden Bildes verglichen, um die Bewegungsvektoren der einzelnen Bereiche zu ermitteln. Zur Reduzierung des erheblichen Rechenaufwandes, der beim Full-Search-Algorithmus erforderlich ist, sind weiterhin prädiktive Schätzverfahren bekannt, bei denen bei der Ermittlung des Bewegungsvektors zu einem Block Bewegungsinformationen berücksichtigt werden, die für Bildblöcke ermittelt wurden, die zeitlich und/oder räumlich benachbart zu einem betrachteten Bildblock liegen. Die für solche zeitlich und/oder räumlich benachbarten Bildblöcke ermittelten Bewegungsvektoren bilden hierbei sogenannte Testvektoren für die Ermittlung eines Bewegungsvektors zu einem betrachteten Bildblock. Aus diesen Testvektoren wird unter Verwendung eines Blockmatching-Verfahrens dann der Bewegungsvektor ausgewählt.

Derartige prädiktive Schätzverfahren sind beispielsweise beschrieben in US 4,853,775 (Rouvrais), US 5,072,293 (de Haan) oder US 6,782,054 B2 (Bellers).

Häufig sind die durch das Blockmatching-Verfahren zu den einzelnen Testvektoren erhaltenen Vergleichsergebnisse nicht eindeutig, d.h. die für zwei oder mehr Testvektoren werden gleiche oder annähernd gleiche Ergebnisse erhalten, so dass die Auswahl des "richtigen" Vektors nicht mehr mit großer Sicherheit möglich ist. Solche gleichen Vergleichsergebnisse entstehen beispielsweise bei großflächigen, sich über mehrere Blöcke erstreckenden unbewegten oder sich langsam bewegenden Objekten.

Aufgabe der vorliegenden Erfindung ist es, ein verbessertes Verfahren zur Auswahl eines Bewegungsvektors aus einer Anzahl von Testvektoren zur Verfügung zu stellen. Diese Aufgabe wird durch ein Verfahren nach Anspruch 1 gelöst. Ausgestaltungen und Weiterbildungen der Erfindung sind Gegenstand von Unteransprüchen.

Ein Ausführungsbeispiel der Erfindung betrifft ein Verfahren zur Auswahl eines Bewegungsvektors zu einem ersten Bildblock eines Bildes einer Bildfolge aus einer Anzahl von Testvektoren, wobei wenigstens einer dieser Testvektoren ein Bewegungsvektor eines weiteren Bildblockes ist, der zeitlich und/oder räumlich benachbart zu dem ersten Bildblock angeordnet ist, oder ein durch Modifikation dieses Bewegungsvektors gebildeter Vektor ist. Bei diesem Verfahren ist vorgesehen: Ermitteln eines Abstandsmaßes zu jedem Testvektor; Ermitteln einer Vektorlänge der Testvektoren und Ermitteln des Testvektors mit der kürzesten Vektorlänge oder einer ersten Untergruppe von Testvektoren mit den im Vergleich zu den übrigen Testvektoren kürzesten Vektorlängen; Ermitteln eines modifizierten Abstandsmaßes zu dem kürzesten Testvektor oder zu den Testvektoren der Untergruppe abhängig von dem zu dem jeweiligen Testvektor ermittelten Abstandsmaß und abhängig von einem Längenmaß; und Vergleichen des modifizierten Abstandsmaßes des kürzesten Bewegungsvektors oder der modifizierten Abstandsmaße der Testvektoren der ersten Untergruppe mit den Abstandsmaßen der übrigen Testvektoren und Auswählen eines der Testvektoren abhängig von diesem Vergleich.

Bei einem Ausführungsbeispiel ist dabei vorgesehen, dass das Längenmaß fest vorgegeben ist. Bei einem weiteren Beispiel ist vorgesehen, dass das modifizierte Längenmaß einer Differenz zwischen dem Abstandsmaß und dem Längenmaß entspricht.

Außerdem besteht die Möglichkeit, das Längenmaß nur bei jeder n-ten, mit n ≥ 2, Ermittlung eines Bewegungsvektors für den ersten Bildblock zu berücksichtigen.

Bei einem weiteren Beispiel des Verfahrens ist vorgesehen, dass den Testvektoren jeweils ein Signifikanzmaß zugeordnet ist. Bei diesem Verfahren ist weiterhin vorgesehen: Ermitteln des modifizierten Abstandsmaßes des kürzesten Testvektors oder der ersten Untergruppe abhängig von dem diesem Testvektor zugeordneten Signifikanzmaß oder von den diesen Testvektoren zugeordneten Signifikanzmaßen und Ermitteln modifizierter Abstandsmaße zu den übrigen Testvektoren, die von den diesen Testvektoren jeweils zugeordneten Signifikanzmaßen abhängig sind; Auswählen eines der Testvektoren als Bewegungsvektor abhängig von den modifizierten Abstandsmaßen; Ermitteln eines neuen Signifikanzmaßes des als Bewegungsvektor ausgewählten Testvektors abhängig davon, ob der ausgewählte Bewegungsvektor wenigstens ein Signifikanzkriterium erfüllt, und Zuordnen dieses neuen Signifikanzmaßes als Signifikanzmaß zu dem Bewegungsvektor für die Auswahl eines Bewegungsvektors zu einem dritten Bildblock, bei dem der Bewegungsvektor des ersten Bildblocks oder ein durch Modifikation dieses Bewegungsvektors gebildeter Vektor als Testvektor ausgewählt wird.

Das modifizierte Abstandsmaß zu einem Bewegungsvektor wird bei diesem Verfahren beispielsweise durch Subtraktion des Signifikanzmaßes von dem Abstandsmaß gebildet. Ausgewählt als Bewegungsvektor wird beispielsweise der Testvektor, für den das geringste modifizierte Abstandsmaß ermittelt wurde. Die Ermittlung des Abstandsmaßes erfolgt beispielsweise durch ein "Blockmatching"-Verfahren, bei dem Bildinhalte der Bildblöcke, die am Anfangspunkt und Endpunkt des Testvektors liegen, bildpunktweise vergleichen werden. Ein Testvektor mit einem "hohen" Signifikanzmaß wird hierbei gegenüber Testvektoren mit einem niedrigeren Signifikanzmaß belohnt.

Der ausgewählte Bewegungsvektor erfüllt beispielsweise ein erstes Signifikanzkriterium, und gilt dann als signifikant, wenn das für den ausgewählten Testvektor ermittelte Abstandsmaß größer ist als ein vorgegebener erster Schwellenwert. Dieser erste Schwellenwert ist dabei beispielsweise so gewählt, dass er größer ist als ein Abstandsmaß, das bei zwei Blöcken mit identischen Bildinhalten aufgrund eines unvermeidlichen Rauschens erhalten würde.

Der ausgewählte Bewegungsvektor kann beispielsweise auch dann als signifikant gelten, und damit ein zweites Signifikanzkriterium erfüllen, wenn das Abstandsmaß des ausgewählten Vektors zwar kleiner ist als der Schwellenwert, wenn jedoch wenigstens ein Testvektor vorhanden ist, dessen Abstandsmaß größer ist als der Schwellenwert. Ein Abstandsmaß, das kleiner ist als der Schwellenwert kann beispielsweise dann vorliegen, wenn der Bildblock innerhalb eines homogenen Bildbereiches liegt und der ausgewählte Testvektor nicht über diesen homogenen Bereich hinauszeigt. Das Vorhandensein eines Vektors, dessen Abstandsmaß größer ist als der Schwellenwert zeigt, dass ein Vektor vorhanden ist, der aus dem homogenen Bereich hinauszeigt, so dass insgesamt von einer signifikanten Bildumgebung im Bereich des Bildblockes ausgegangen werden kann, mit dem Ergebnis, dass auch ein Vektor, dessen Abstandsmaß kleiner ist als der Schwellenwert signifikant sein kann. Ein Abstandsmaß das kleiner ist als der Schwellenwert kann beispielsweise auch dann vorliegen, wenn der beste Bewegungsvektor in einer strukturierten Umgebung liegt und exakt die Bewegung des zugehörigen Bildblockes wiedergibt, wenn der Bewegungsvektor also genau "matcht". Ein großes Abstandsmaß für einen weiteren (falschen bzw. nicht passenden) Bewegungsvektor zeigt in diesem Fall an, dass eine signifikante Bildumgebung vorhanden ist.

Ein weiteres Signifikanzkriterium ist für einen ausgewählten Testvektor beispielsweise dann erfüllt, wenn eine Differenz zwischen dem größten der für die Testvektoren ermittelten Abstandsmaß und dem kleinsten der für die Testvektoren ermittelten Abstandsmaß größer ist als ein vorgegebener zweiter Schwellenwert.

Bei einem Beispiel ist vorgesehen, das Signifikanzmaß des als Bewegungsvektor ausgewählten Testvektors auf einen vorgegebenen Wert zu setzen, wenn der ausgewählte Testvektor wenigstens ein Signifikanzkriterium erfüllt, und das neue Signifikanzmaß durch Verringern des dem ausgewählten Testvektor bisher zugeordneten Signifikanzmaßes zu ermitteln, wenn der ausgewählte Testvektor kein Signifikanzkriterium erfüllt. Die Signifikanz eines Testvektors, der in einem nachfolgenden Auswahlverfahren für einen weiteren Bildblock wieder ausgewählt wird ohne erneut signifikant zu sein, wird dadurch schrittweise verringert. Alternativ dazu, das Signifikanzmaß bei vorhandener Signifikanz des ausgewählten Testvektors auf einen vorgegebenen Wert zu setzen, besteht die Möglichkeit, bei gegebener Signifikanz des ausgewählten Testvektors dessen Signifikanzmaß um einen vorgegebenen Wert zu erhöhen, um das neue Signifikanzmaß zu erhalten.

Optional besteht die Möglichkeit, die Herkunft der Testvektoren in die Ermittlung des modifizierten Abstandsmaßes einfließen zu lassen. So besteht beispielsweise die Möglichkeit, solche Testvektoren zu "belohnen", die unmittelbar einen Bewegungsvektor eines zeitlich oder räumlich benachbarten Bildblockes darstellen. Hierzu wird für solche Testvektoren bei der Ermittlung des modifizierten Abstandswertes beispielsweise ein Bonuswert von dem ermittelten Abstandswert subtrahiert oder für Testvektoren, die einen modifizierten Bewegungsvektor darstellen, wird ein Strafwert zu dem berechneten Abstandsmaß hinzuaddiert.

Ausführungsbeispiele der vorliegenden Erfindung werden nachfolgend anhand von Figuren näher erläutert. In den Figuren sind nur die zum Verständnis der vorliegenden Erfindung notwendigen Merkmale dargestellt. Gleiche

Bezugzeichen bezeichnen dabei gleiche Teile und Verfahrensschritte mit gleicher Bedeutung.

Figur 1    zeigt schematisch einen zeitlichen Ausschnitt einer Bildfolge, die mehrere aufeinanderfolgende Bilder mit jeweils einer Anzahl von Bildblöcken aufweist.

Figur 2    veranschaulicht Verfahrensschritte eines Ausführungsbeispiels eines erfindungsgemäßen Verfahrens anhand eines Ablaufdiagramms.

Figur 3    zeigt beispielhaft Abstandsmaße, Signifikanzmaße und modifizierte Abstandsmaße für Testvektoren in einem Diagramm.

Figur 4    zeigt einen der anhand von Figur 2 erläuterten Verfahrensschritte im Detail anhand eines Ablaufdiagramms.

Figur 5    veranschaulicht ein weiteres Ausführungsbeispiel eines erfindungsgemäßen Verfahrens anhand eines Ablaufdiagramms.

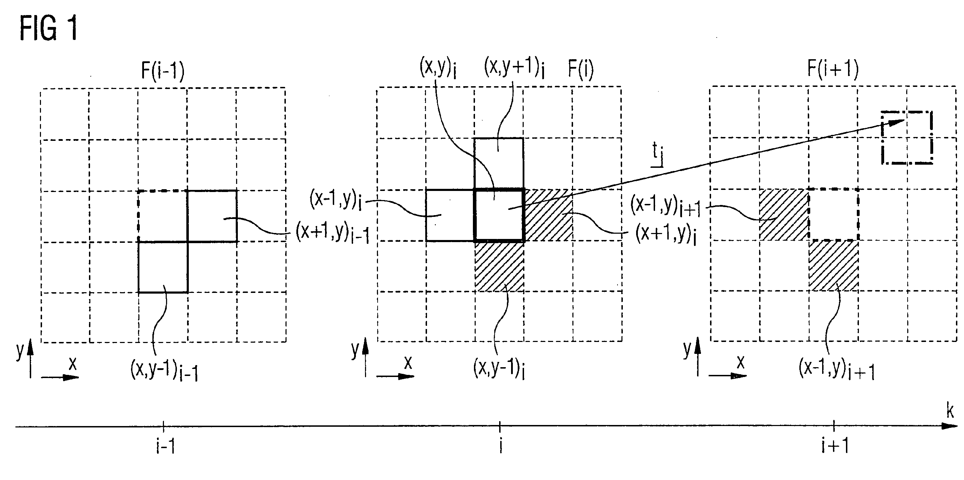

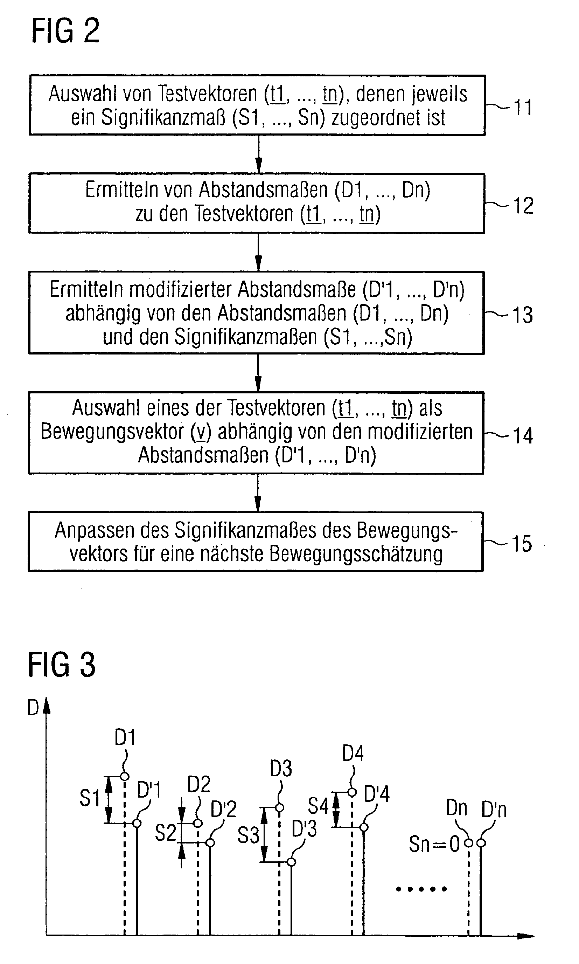

Figur 1 zeigt schematisch einen zeitlichen Ausschnitt einer Bildfolge, die mehrere zeitlich aufeinanderfolgende Bilder F(i-1), F(i), F(i+1) aufweist. k bezeichnet dabei eine diskrete Zeitvariable. i-1, i und i+1 sind Zeitpunkte, zu denen die einzelnen Bilder F(i-1), F(i), F(i+1) vorliegen. Die einzelnen Bilder, die in Figur 1 nur ausschnittsweise dargestellt sind, umfassen eine Anzahl von Bildblöcken mit jeweils mehreren Bildpunkten (nicht dargestellt). Die einzelnen Bildblöcke umfassen beispielsweise 8x8 oder 16x16 Bildpunkte. Den einzelnen Bildpunkten ist hierbei wenigstens ein Bildinformationswert zugeordnet. So sind den einzelnen Bildpunkten beispielsweise drei Farbintensitätswerte (RGB-Werte) für die Grundfarben Rot, Grün und Blau oder ein Luminanzwert (Y-Wert) und zwei Chrominanzwerte (UV-Werte) zugeordnet. Die den einzelnen Bildpunkten zugeordneten Bildinformationswerte können sich von Bild zu Bild ändern, wodurch eine bewegte Bilddarstellung möglich wird.
Für die nachfolgende Erläuterung sei angenommen, dass die einzelnen Bildblöcke eines Bildes rasterartig angeordnet sind. Für die Bezeichnung eines an einer bestimmten Position befindlichen Bildblockes in einem bestimmten Bild wird nachfolgend die Nomenklatur $(a, b)_c$ verwendet, wobei a die horizontale Position des Bildblockes innerhalb des Rasters, b die vertikale Position des Bildblockes innerhalb des Rasters und c die zeitliche Position des jeweiligen Bildes, dem der Bildblock entstammt, bezeichnet.
Zu den einzelnen Bildblöcken sollen Bewegungsvektoren, die auch als Verschiebungsvektoren bezeichnet werden, ermittelt werden. Ein einem Bildblock zugeordneter Bewegungsvektor enthält dabei eine Information über eine räumliche Verschiebung eines durch den jeweiligen Bildblock repräsentierten Bildinhaltes von Bild zu Bild. Für die nachfolgende Erläuterung sei ein Bildblock $(x, y)_i$ innerhalb des Bildes F(i) betrachtet, der in Figur 1 fett dargestellt ist. Ein Verfahren zur Ermittlung eines Bewegungsvektors zu diesem Bildblock $(x, y)_i$ wird nachfolgend anhand des Ablaufdiagramms in Figur 2 in Verbindung mit Figur 1 erläutert. $v(a, b)_c$ bezeichnet nachfolgend allgemein einen einem Bildblock $(a, b)_c$ zugeordneten Bewegungsvektor.
Bezugnehmend auf Figur 2 wird in einem ersten Verfahrensschritt 11 eine Anzahl von Testvektoren ausgewählt bzw. ermittelt, aus denen der Bewegungsvektor $\underline{v}(x, y)_i$ anhand noch erläuterter weiterer Verfahrensschritte ausgewählt wird. Diese Testvektoren sind beispielsweise bereits vorher ermittelte Bewegungsvektoren zu Bildblöcken, die zeitlich und/oder räumlich benachbart zu dem betrachteten Bildblock $(x, y)_i$ angeordnet sind. Diese Testvektoren können auch Vektoren sein, die durch Modifikation eines Bewegungsvektors eines zeitlich und/oder räumlich benachbarten Bildblocks entstanden sind. Eine solche Modifikation eines Bewegungsvektors ist insbesondere die Addition eines vorgegebenen Modifikationsvektors zu dem Bewegungsvektor. Darüber hinaus kann einer der Testvektoren der Nullvektor sein.
Zu Zwecken der Erläuterung sei angenommen, dass jeweils fünf Testvektoren ausgewählt werden, für die beispielsweise gilt:

$$\underline{t1} = 0 \tag{1a}$$

$$\underline{t2} = \underline{v}(x, y+1)_i \tag{1b}$$

$$\underline{t2} = \underline{v}(x-1, y)_i \tag{1c}$$

$$\underline{t2} = \underline{v}(x, y-1)_{i-1} \qquad\qquad (1d)$$

$$\underline{t2} = \underline{v}(x+1, y)_{i-1} \qquad\qquad (1e).$$

Ein erster Testvektor $\underline{t1}$ ist hierbei der Nullvektor. Ein zweiter Testvektor $\underline{t2}$ ist der Bewegungsvektor zu einem Bildblock $(x, y+1)_i$, der innerhalb desselben Bildes F(i) unmittelbar oberhalb des betrachteten Bildblocks $(x, y)_i$ liegt, ein dritter Testvektor t3 ist ein Bewegungsvektor zu einem Bildblock $(x-1, y)_i$, der in dem Bild F(i) links benachbart zu dem betrachteten Bildblock $(x, y)_i$ angeordnet ist. Diese beiden Bildblöcke $(x, y+1)_i$ und $(x-1, y)_i$ sind dabei räumliche Nachbarn des Bildblocks $(x, y)_i$. Ein vierter Testvektor $\underline{t4}$ ist der Bewegungsvektor zu einem Bildblock $(x, y-1)_{i-1}$, der sich in einem zeitlich vorangehenden Bild F(i-1) unterhalb der Position (x, y) des betrachteten Bildblocks $(x, y)_i$ befindet. Ein fünfter Bewegungsvektor $\underline{t5}$ ist in dem Beispiel der Bewegungsvektor eines Bildblocks $(x+1, y)_{i-1}$, der sich in dem zeitlich vorangehenden Bild F(i-1) rechts neben der Position des betrachteten Bildblocks $(x, y)_i$ befindet. Diese beiden Bildblöcke $(x, y-1)_{i-1}$ und $(x+1, y)_{i-1}$ sind hierbei räumliche und zeitliche Nachbarn des Bildblocks $(x, y)_i$.

Es sei darauf hingewiesen, dass diese Auswahl der Testvektoren lediglich als Beispiel zu verstehen ist und zur weiteren Erläuterung des Verfahrens dient. Selbstverständlich besteht die Möglichkeit, mehr als fünf Testvektoren auszuwählen und die Positionen der zeitlich und/oder räumlich benachbarten Bildblöcke, deren Bewegungsvektoren als Testvektor ausgewählt werden, anders als in Figur 1 auszuwählen. Als Testvektor könnte beispielsweise auch der Bewegungsvektor eines Bildblocks $(x, y)_{i-1}$ ausgewählt werden, also der Bewegungsvektor des Bildblocks, der nur zeitlich benachbart zu dem betrachteten Bildblock $(x, y)_i$ angeordnet ist.

Testvektoren können außerdem durch Modifikation der zu zeitlich und/oder räumlich benachbarten Bildblöcken ermittelten Bewegungsvektoren gebildet werden, indem zu einem solchen Bewegungsvektor ein Modifikationsvektor hinzuaddiert wird. Für einen derart ermittelten Testvektor gilt beispielsweise:

$$\underline{t} = \underline{v}(x+u, y+v)_{i-w} + \underline{m} \qquad\qquad (2).$$

$\underline{t}$ bezeichnete dabei einen durch Modifikation eines Bewegungsvektors gebildeten Testvektor, $\underline{v}(x+u, y+v)_{i-w}$ bezeichnet einen räumlich und/oder zeitlich benachbarten Bildblock zu dem Bildblock $(x, y)_i$, wobei für w beispielsweise w=0 oder w=1 gilt. $\underline{m}$ bezeichnet den Modifikationsvektor. Gleichung (2) kann als allgemeine Vorschrift zur Auswahl solcher Testvektoren, die nicht der Nullvektor sind, angesehen werden. Für die in den Gleichungen (1b) bis (1e) angegebenen Testvektoren ist der Modifikationsvektor m dabei der Nullvektor. Der Modifikationsvektor ist beispielsweise so gewählt, dass er von Bildblock zu Bildblock unterschiedlich sein kann, dass er für Bildblöcke, die sich an derselben Position innerhalb der aufeinanderfolgenden Bilder befinden, jedoch stets gleich ist.

Den einzelnen Testvektoren ist jeweils ein Signifikanzmaß zugeordnet. Diese, den Testvektoren $\underline{t1}$, $\underline{t2}$,..., $\underline{tn}$ zugeordneten Signifikanzmaße werden nachfolgend mit S1, S2,..., Sn bezeichnet. Für die weitere Erläuterung sei zunächst angenommen, dass diese Signifikanzmaße zu den einzelnen Testvektoren gegeben sind. Die Ermittlung dieser Signifikanzmaße zu den einzelnen Testvektoren wird noch erläutert werden.

Bezug nehmend auf Figur 2 ist in einem weiteren Verfahrensschritt 12 vorgesehen, Abstandsmaße D1,..., Dn zu den einzelnen Testvektoren $\underline{t1}$,..., $\underline{tn}$ zu ermitteln. Die Ermittlung eines solchen Abstandsmaßes zu einem Testvektor ist grundsätzlich bekannt, wird nachfolgend jedoch kurz erläutert. Zur Ermittlung eines solchen Abstandsmaßes werden Bildinhalte der Bildblöcke verglichen, die sich an durch den Testvektor vorgegebenen Positionen befinden. Beispielhaft sei in diesem Zusammenhang der in Figur 1 dargestellte, einen beliebigen der Testvektoren repräsentierende Testvektor $\underline{tj}$ betrachtet. Dieser Testvektor steht für eine Verschiebung des Bildinhaltes des Bildblocks $(x, y)_i$ von der Position (x, y) in dem Bild F(i) an eine Position $(x+\Delta x, y+\Delta y)$ in dem zeitlich nachfolgenden Bild F(i+1). $\Delta x$ und $\Delta y$ bezeichnen dabei beliebige Verschiebungen gegenüber der Position (x, y) des Bildblocks $(x, y)_i$ in dem Bild F(i). Die Koordinaten der zu den Bildblöcken ermittelten Bewegungsvektoren, und damit die Koordinaten der Testvektoren, sind - wie in Figur 1 für den Bildblock $(x+\Delta x, y+\Delta y)$ dargestellt ist - nicht an das Raster der Bildblöcke gebunden. Die Bewegungsvektoren bzw. Testvektoren können vielmehr auf Blöcke an beliebigen Positionen innerhalb des Bildblockrasters zeigen.

Zur Ermittlung eines Abstandsmaßes zu dem Testvektor $\underline{tj}$ werden beispielsweise Differenzen der Bildinformationswerte solcher Bildpunkte ermittelt, die sich innerhalb der Bildblöcke $(x, y)_i$ und $(x+\Delta x, y+\Delta y)_{i+1}$ an gleichen Positionen befinden, und die Beträge oder ganzzahlige Potenzen dieser einzelnen Bildpunktdifferenzen werden aufaddiert, um das Abstandsmaß zu erhalten. Das durch Addition der Beträge der Bildpunktdifferenzen erhaltene Abstandsmaß wird auch als Abstand nach der 1-Norm bezeichnet, während die Summe der Quadrate der Bildpunktdifferenzen den Abstand nach der sogenannten 2-Norm bezeichnet. Sind einem Bildpunkt - wie zuvor erläutert - mehrere Bildinformationswerte zugeordnet, so kann beispielsweise einer dieser Bildinformationswerte, beispielsweise der Y-Wert bei einer YUV-Darstellung, für die Ermittlung des Abstandsmaßes herangezogen werden. Außerdem besteht die Möglichkeit, Abstandsmaße für je einen dieser Bildinformationswerte zu ermitteln und diese einzelnen Abstandsmaße dann zu addieren.

Allgemein stellt das Abstandsmaß ein Maß für einen Unterschied zwischen den Bildinhalten der dem Testvektor zugeordneten Bildblöcke dar, wobei das Abstandsmaß umso größer ist, je mehr Bildpunkte vorhanden sind, deren Bildinformationswerte sich unterscheiden bzw. je stärker sich die Bildinformationswerte einzelner Bildpunkte der betrachteten Bildblöcke unterscheiden. Unterscheiden sich die einem ersten Testvektor zugeordneten Bildblöcke stärker voneinander als die einem zweiten Testvektor zugeordneten Bildblöcke, so liegt für den ersten Testvektor ein größeres Abstandsmaß als für den zweiten Testvektor vor. "Größer" und "kleiner" bezieht sich dabei nicht notwendigerweise auf die diese Abstandsmaße repräsentierenden Abstandszahlenwerte. So könnte als Abstandsmaß beispielsweise auch die Differenz zwischen einem konstanten Zahlenwert und der Summe der Beträge der Bildpunktdifferenzen verwendet werden.

In einem nächsten Verfahrensschritt 13 ist vorgesehen, unter Verwendung der zu den einzelnen Testvektoren t1,..., tn ermittelten Abstandsmaße D1,..., Dn und unter Verwendung der den einzelnen Testvektoren zugeordneten Signifikanzmaße S1,..., Sn modifizierte Abstandsmaße D'1,..., D'n zu ermitteln. Für das modifizierte Abstandsmaß D'j eines Testvektors tj gilt beispielsweise:

$$D'j = Dj - Sj \hspace{4cm} (3),$$

wobei Dj das für den Testvektor tj ermittelte Abstandsmaß und Sj das diesem Testvektor zugeordnete Signifikanzmaß ist. Das modifizierte Abstandsmaß D'j ist dabei umso kleiner, je kleiner das zuvor ermittelte Abstandsmaß Dj ist und je höher das dem Testvektor zugeordnete Signifikanzmaß ist.

Anhand der modifizierten Signifikanzmaße D'1,..., D'n wird dann in einem nächsten Verfahrensschritt 14 einer der Testvektoren t1,..., tn als Bewegungsvektor bzw. Verschiebungsvektor v(x, y)i für den Bildblock (x, y)i ausgewählt. Ausgewählt wird beispielsweise der Testvektor, für den das kleinste modifizierte Abstandsmaß D' ermittelt wurde. Die Ermittlung des modifizierten Abstandsmaßes unter Anwendung der Gleichung (3) ist beispielhaft in Figur 3 dargestellt. Figur 3 zeigt ein Diagramm, in dem die für die einzelnen Testvektoren t1,..., tn ermittelten Abstandsmaße, die den Testvektoren zugeordneten t1,..., tn Signifikanzmaße S1,..., Sn und die daraus resultierenden modifizierten Abstandsmaße D'1,..., D'n aufgetragen sind. Bei dem in Figur 3 dargestellten Beispiel würde der Testvektor t3, der das kleinste modifizierte Abstandsmaß D'3 besitzt, ausgewählt. Dieser Testvektor t3 besitzt in dem dargestellten Beispiel zwar nicht das kleinste Abstandsmaß, jedoch eine hohe Signifikanz S3, was im Ergebnis zum kleinsten modifizierten Abstandsmaß D' führt.

Zu dem aus den Testvektoren ausgewählten Bewegungsvektor v(x, y)i wird außerdem das Signifikanzmaß angepasst, bzw. es wird ein neues Signifikanzmaß ermittelt, das abhängig davon ist, ob der ausgewählte Bewegungsvektor wenigstens ein Signifikanzkriterium erfüllt. Dieses Anpassen des Signifikanzmaßes ist in Figur 2 als Verfahrensschritt 15 dargestellt. Das für den ausgewählten Bewegungsvektor in diesem Verfahrensschritt 15 ermittelte Signifikanzmaß wird für eine Bewegungsschätzung bzw. für eine Ermittlung eines Bewegungsvektors zu zeitlich und/oder räumlich zu dem Bildblock (x, y)i benachbarten Bildblöcken verwendet, bei der der für den Bildblock (x, y)i ermittelte Bewegungsvektor v(x, y)i als Testvektor ausgewählt wird. Bei Anwendung des anhand von Figur 1 beispielhaft erläuterten Auswahlschemas, bei dem als Testvektoren der Nullvektor sowie die Bewegungsvektoren von zwei räumlich benachbarter und von zwei zeitlich und räumlich benachbarter Bildblöcke ausgewählt werden, würde der für den Bildblock (x, y)i ermittelte Bewegungsvektor v(x, y)i als einer der Testvektoren bei einer Bewegungsschätzung zu den Bildblöcken (x+1, y)i und (x, y-1)i innerhalb desselben Bildes F(i) und bei einer Bewegungsschätzung zu den Bildblöcken (x-1, y)i+1 und (x-1, y)i+1 in dem zeitlich darauffolgenden Bild F(i+1) ausgewählt.

Die Anpassung des Signifikanzmaßes des für den Bildblock (x, y)i ausgewählten Bewegungsvektors erfolgt abhängig von den für die einzelnen Testvektoren t1,..., tn ermittelten Abstandsmaßen. Der ausgewählte Bewegungsvektor erfüllt beispielsweise dann ein erstes Signifikanzkriterium, wenn dessen Abstandsmaß größer ist als ein vorgegebener erster Schwellenwert, wenn also:

$$D > T1 \hspace{5cm} (4)$$

gilt. D bezeichnet dabei das Abstandsmaß des als Bewegungsvektor ausgewählten Testvektors, und T1 bezeichnet den ersten Schwellenwert.

Alternativ kann der ausgewählte Bewegungsvektor ein Signifikanzkriterium erfüllen, wenn das Abstandsmaß des ausgewählten Vektors zwar kleiner ist als der Schwellenwert, wenn jedoch wenigstens ein Testvektor vorhanden ist, dessen Abstandsmaß größer ist als der Schwellenwert. Ein solches Szenario mit einem ausgewählten Testvektor, dessen Abstandsmaß kleiner ist als der Schwellenwert und mit wenigstens einem weiteren Testvektor, dessen Abstandsmaß größer ist als der Schwellenwert bedeutet, dass die Bewegungsschätzung für einen nicht homogenen Bildbereich und sich die unterschiedlichen Abstandsmaße signifikant voneinander unterscheiden.

Ein weiteres Signifikanzkriterium für den ausgewählten Bewegungsvektor liegt beispielsweise dann vor, wenn eine Differenz zwischen dem größten der für die Testvektoren ermittelten Abstandsmaße und dem kleinsten der für die Testvektoren ermittelten Abstandsmaße größer ist als ein vorgegebener zweiter Schwellenwert, wenn also gilt:

$$D_{max} - D_{min} > T2 \qquad\qquad (5).$$

$D_{max}$ bezeichnet hierbei das größte der für die Testvektoren ermittelte Abstandsmaß, $D_{min}$ bezeichnet das kleinste der für die Testvektoren ermittelte Abstandsmaß und T2 bezeichnet den zweiten Schwellenwert. Dieser zweite Schwellenwert T2 ist beispielsweise so gewählt, dass er größer ist, als ein durch Rauschen bedingter Anteil an den einzelnen Abstandsmaßen. Das Vorliegen dieses Signifikanzkriteriums ist gleichbedeutend damit, dass wenigstens ein Testvektor vorhanden ist, der über einen homogenen unbewegten Bildbereich hinauszeigt

Allgemein lässt sich sagen, dass ein Signifikanzkriterium dann erfüllt ist, wenn von den ausgewählten Testvektoren wenigstens einer ein Abstandsmaß aufweist, das signifikant größer ist als die Abstandsmaße der übrigen Testvektoren. Besitzen alle Testvektoren Abstandsmaße, die im gleichen Bereich unterhalb eines Schwellenwertes liegen, so kann nicht von einem signifikanten Testvektorfeld gesprochen werden.

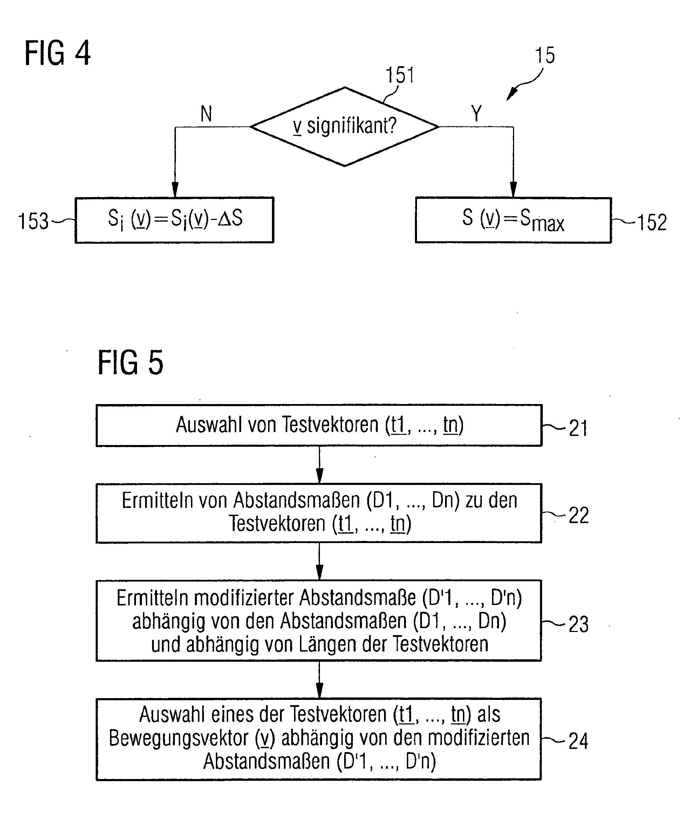

Sofern der ausgewählte Bewegungsvektor wenigstens ein Signifikanzkriterium erfüllt, wenn der Vektor also signifikant ist, so wird das Signifikanzmaß beispielsweise auf einen vorgegebenen Wert $S_{max}$ gesetzt. Dieses Vorgehen ist anhand der Verfahrensschritte 151, 152 in Figur 4 erläutert. Alternativ dazu besteht die Möglichkeit, das dem als Bewegungsvektor ausgewählten Testvektor bisher zugeordnete Signifikanzmaß um einen vorgegebenen Wert zu erhöhen, wenn der ausgewählte Bewegungsvektor als signifikant ermittelt wird.

Ist der ausgewählte Bewegungsvektor nicht signifikant, erfüllt dieser Bewegungsvektor also kein Signifikanzkriterien, so wird das neue Signifikanzmaß beispielsweise dadurch ermittelt, dass das bisherige Signifikanzmaß um einen vorgegebenen ΔS dekrementiert wird, was in Figur 4 anhand des Verfahrensschrittes 153 dargestellt ist. Das Signifikanzmaß wird dabei in nicht näher dargestellter Weise allerdings maximal bis auf Null dekrementiert, das kleinste mögliche Signifikanzmaß, das einem Testvektor zugeordnet ist, ist also Null.

Unter "bisheriges Signifikanzmaß" ist hierbei das Signifikanzmaß zu verstehen, das dem als Bewegungsvektor ausgewählten Testvektor zuvor zugeordnet war.

Das dem ausgewählten Bewegungsvektor auf die erläuterte Weise zugeordnete Signifikanzmaß bleibt dem Bewegungsvektor zugeordnet, wenn dieser für eine Bewegungsschätzung zu einem zeitlich und/oder räumlich benachbarten Bildblock als Testvektor ausgewählt wird. Dieses Signifikanzmaß bleibt auch erhalten bzw. zugeordnet, wenn der Testvektor durch Modifikation des ausgewählten Bewegungsvektors gebildet wird. In diesem Zusammenhang besteht die Möglichkeit, das Signifikanzmaß eines Testvektors, der durch Modifikation eines Bewegungsvektors gebildet wird, gegenüber dem Signifikanzmaß des Bewegungsvektors zu verringern. Im Ergebnis bedeutet dies eine "Bestrafung" des durch Modifikation eines Bewegungsvektors gebildeten Testvektors. Alternativ dazu besteht die Möglichkeit, bei der Ermittlung der modifizierten Abstandsmaße unter Verwendung der Abstandsmaße und der Signifikanzmaße bei solchen Testvektoren, die durch Modifikation eines Bewegungsvektors entstanden sind, einen "Strafwert" zum ermittelten Abstandsmaß hinzu zu addieren.

Zu Beginn des Verfahrens, wenn es zu einem Bildblock noch keine räumlich und/oder zeitlich benachbarten Bildblöcke gibt, zu denen bereits Bewegungsvektoren zugeordnet sind, werden als Testvektoren beispielsweise fest vorgegebene Initialisierungsvektoren ausgewählt. Als Signifikanzmaß ist diesen Initialisierungsvektoren beispielsweise der Wert Null oder ein anderer vorgegebener Wert zugeordnet. Für den aus diesen Initialisierungsvektoren zu dem Bildblock ausgewählten Bewegungsvektor wird dann unter Berücksichtigung des Vorliegens von Signifikanzkriterien für den ausgewählten Bewegungsvektor ein Signifikanzmaß ermittelt.

Alternativ oder zusätzlich zu der Berücksichtigung von Signifikanzmaßen bei der Ermittlung modifizierter Abstandsmaße aus den für die einzelnen Testvektoren berechneten Abstandsmaßen kann ein wenigstens einem der Testvektoren zugeordnetes Längenmaß berücksichtigt werden. Dieses Längenmaß ist beispielsweise fest vorgegeben und dient zur "Belohnung" des Testvektors mit der kürzesten Vektorlänge bzw. einer Untergruppe von Testvektoren, die die kürzesten Vektorlängen besitzen.

Die Ermittlung eines modifizierten Abstandsmaßes sieht hierbei vor, den oder die Testvektoren mit der kürzesten

EP 2 059 052 A1

Vektorlänge bzw. den kürzesten Vektorlängen zu ermitteln und modifizierte Abstandsmaße zu diesen ermittelten Vektoren wie folgt zu ermitteln:

$$D' = D - L \qquad\qquad (6).$$

D' bezeichnet hierbei das modifizierte Abstandsmaß des kürzesten Testvektors bzw. eines Testvektors aus der Untergruppe der kürzesten Testvektoren, D bezeichnet das zu dem Testvektor ermittelte Abstandsmaß und L bezeichnet das fest vorgegebene Längenmaß. Die Untergruppe der kürzesten Testvektoren umfasst beispielsweise eine vorgegebene Anzahl von Testvektoren, die alle kürzer sind als jeder Testvektor, der nicht zu dieser Untergruppe gehört.
Anhand der so ermittelten modifizierten Abstandsmaße wird anschließend einer der Testvektoren als Bewegungsvektor ausgewählt, wobei beispielsweise der Testvektor mit dem geringsten modifizierten Abstandsmaß ausgewählt wird. Bei diesem Verfahren werden solche Testvektoren "belohnt", die gegenüber anderen Testvektoren kürzer sind, bzw. es wird nur der kürzeste Testvektor belohnt. Insbesondere bei Vorliegen eines homogenen Bildbereiches, bei dem die Abstandsmaße aller Testvektoren in einem gleichen Bereich liegen, werden bei diesem Vorgehen eher kürzere Testvektoren, insbesondere der Nullvektor ausgewählt. Das fest vorgegebene Längenmaß bzw. der Längenbonus sind so klein gewählt, dass bei einer homogenen Bildumgebung das Vektorfeld langsam in Richtung des Nullvektors "zurückgestellt" wird, dass andererseits die Konvergenz des Vektorfeldes jedoch nicht negativ beeinflusst wird. Bei einer Ausführungsform ist dabei vorgesehen, das Längenmaß nur bei jeder n-ten Ermittlung eines Bewegungsvektors für einen vorgegebenen Bildblock zu verwenden, wobei n eine ganze Zahl größer oder gleich 2 ist.
Diese Verfahrensschritte des alternativen Verfahrens, nämlich Auswahl von Testvektoren, Ermitteln von Abstandsmaßen zu den Testvektoren, Ermitteln modifizierter Abstandsmaße abhängig von den Abstandsmaßen und abhängig von dem Längenmaß, sowie die Auswahl eines der Testvektoren als Bewegungsvektor abhängig von den modifizierten Abstandsmaßen sind anhand eines Ablaufdiagramms mit Verfahrensschritten 21 bis 24 in Figur 5 dargestellt. Selbstverständlich besteht auch bei diesem Verfahren die Möglichkeit, solche Testvektoren gegenüber anderen Testvektoren zu "bestrafen", die nicht unmittelbar einen Bewegungsvektor eines zeitlich und/oder räumlich benachbarten Bildblocks entsprechen, sondern die durch Modifikation des Bewegungsvektors eines räumlich und/oder zeitlich benachbarten Bildblocks entstanden sind.

**Patentansprüche**

1. Verfahren zur Auswahl eines Bewegungsvektors zu einem ersten Bildblock eines Bildes einer Bildfolge aus einer Anzahl von Testvektoren, wobei wenigstens einer dieser Testvektoren ein Bewegungsvektor eines weiteren Bildblockes ist, der zeitlich und/oder räumlich benachbart zu dem ersten Bildblock angeordnet ist, oder ein durch Modifikation dieses Bewegungsvektors gebildeter Vektor ist und wobei das Verfahren aufweist:

   Ermitteln eines Abstandsmaßes zu jedem Testvektor,
   Ermitteln einer Vektorlänge der Testvektoren und Ermitteln des Testvektors mit der kürzesten Vektorlänge oder einer ersten Untergruppe von Testvektoren mit den im Vergleich zu den übrigen Testvektoren kürzesten Vektorlängen,
   Ermitteln eines modifizierten Abstandsmaßes zu dem kürzesten Testvektor oder zu den Testvektoren der Untergruppe abhängig von dem zu dem jeweiligen Testvektor ermittelten Abstandsmaß und abhängig von einem Längenmaß,
   Vergleichen des modifizierten Abstandsmaßes des kürzesten Bewegungsvektors oder der modifizierten Abstandsmaße der Testvektoren der ersten Untergruppe mit den Abstandsmaßen der übrigen Testvektoren und Auswählen eines der Testvektoren abhängig von diesem Vergleich.

2. Verfahren nach Anspruch 1, bei dem das Längenmaß fest vorgegeben ist.

3. Verfahren nach Anspruch 1 oder 2, bei dem das modifizierte Längenmaß einer Differenz zwischen dem Abstandsmaß und dem Längenmaß entspricht.

4. Verfahren nach einem der Ansprüche 1 bis 3, bei dem das Längenmaß nur bei jeder n-ten, mit n ≥ 2, Ermittlung eines Bewegungsvektors für den ersten Bildblock berücksichtigt wird.

5. Verfahren nach einem der Ansprüche 1 bis 4, bei dem den Testvektoren jeweils ein Signifikanzmaß zugeordnet ist und das weiterhin aufweist:

Ermitteln des modifizierten Abstandsmaßes des kürzesten Testvektors oder der ersten Untergruppe abhängig von dem diesem Testvektor zugeordneten Signifikanzmaß oder von den diesen Testvektoren zugeordneten Signifikanzmaßen und Ermitteln modifizierter Abstandsmaße zu den übrigen Testvektoren, die von den diesen Testvektoren jeweils zugeordneten Signifikanzmaßen abhängig sind,
Auswählen eines der Testvektoren als Bewegungsvektor abhängig von den modifizierten Abstandsmaßen,
Ermitteln eines neuen Signifikanzmaßes des als Bewegungsvektor ausgewählten Testvektors abhängig davon, ob der ausgewählte Bewegungsvektor wenigstens ein Signifikanzkriterium erfüllt, und Zuordnen dieses neuen Signifikanzmaßes als Signifikanzmaß zu dem Bewegungsvektor für die Auswahl eines Bewegungsvektors zu einem dritten Bildblock, bei dem der Bewegungsvektor des ersten Bildblocks oder ein durch Modifikation dieses Bewegungsvektors gebildeter Vektor als Testvektor ausgewählt wird.

6. Verfahren nach Anspruch 5, bei dem der ausgewählte Testvektor ein erstes Signifikanzkriterium erfüllt, wenn sein Abstandsmaß größer als ein vorgegebener erster Schwellenwert ist.

7. Verfahren nach Anspruch 5 oder 6, bei dem der ausgewählte Bewegungsvektor ein zweites Signifikanzkriterium erfüllt, wenn sein Abstandsmaß kleiner als der erste Schwellenwert ist, wenn jedoch das Abstandsmaß wenigstens eines der anderen Testvektoren größer ist als der erste Schwellenwert.

8. Verfahren nach einem der Ansprüche 5 bis 7, bei dem der ausgewählte Testvektor ein zweites Signifikanzkriterium erfüllt, wenn eine Differenz zwischen einem größten der für alle Testvektoren ermittelten Abstandsmaße und dem für den ausgewählten Bewegungsvektor ermittelten Abstandsmaß größer als ein zweiter Schwellenwert ist.

9. Verfahren nach einem der Ansprüche 5 bis 8,
bei dem für die Ermittlung des neuen Signifikanzmaßes ermittelt wird, ob der als Bewegungsvektor ausgewählte Testvektor wenigstens ein Signifikanzkriterium erfüllt,
bei dem das neue Signifikanzmaß auf einen vorgegebenen Wert gesetzt wird, wenn der ausgewählte Testvektor wenigstens ein Signifikanzkriterium erfüllt, und
bei dem das neue Signifikanzmaß durch Verringern des dem ausgewählten Testvektor bisher zugeordneten Signifikanzmaßes gebildet wird, wenn der ausgewählte Testvektor kein Signifikanzkriterium erfüllt.

10. Verfahren nach einem der vorangehenden Ansprüche, bei dem die Testvektoren den Nullvektor umfassen.

11. Verfahren nach einem der vorangehenden Ansprüche, bei dem wenigstens einer der Testvektoren aus dem Bewegungsvektor des weiteren Bildblocks durch Addition eines Aktualisierungsvektors gebildet ist.

12. Verfahren nach einem der Ansprüche 5 bis 11, bei dem das modifizierte Abstandsmaß durch Subtraktion des Signifikanzmaßes von dem Abstandsmaß ermittelt wird.

13. Verfahren nach einem der vorangehenden Ansprüche, bei dem das modifizierte Abstandsmaß eines Testvektors zusätzlich davon abhängig ist, ob der Testvektor ein Bewegungsvektor eines zeitlich und/oder räumlich benachbarten Bildblockes ist oder ob der Testvektor durch Modifikation eines zeitlich und/oder räumlich benachbarten Bildblockes gebildet ist.

FIG 1

F(i-1)

$(x,y)_i$  $(x,y+1)_i$  F(i)

F(i+1)

$(x-1,y)_i$

$(x+1,y)_{i-1}$

$\underline{t_j}$

$(x-1,y)_{i+1}$

$(x+1,y)_i$

$(x,y-1)_{i-1}$

$(x,y-1)_i$

$(x-1,y)_{i+1}$

y

x

y

x

y

x

k

i-1

i

i+1

EP 2 059 052 A1

# FIG 2

Auswahl von Testvektoren (t1, ..., tn), denen jeweils
ein Signifikanzmaß (S1, ..., Sn) zugeordnet ist  ~11

Ermitteln von Abstandsmaßen (D1, ..., Dn)
zu den Testvektoren (t1, ..., tn)  ~12

Ermitteln modifizierter Abstandsmaße (D'1, ..., D'n)
abhängig von den Abstandsmaßen (D1, ..., Dn)
und den Signifikanzmaßen (S1, ...,Sn)  ~13

Auswahl eines der Testvektoren (t1, ..., tn) als
Bewegungsvektor (v) abhängig von den modifizierten
Abstandsmaßen (D'1, ..., D'n)  ~14

Anpassen des Signifikanzmaßes des Bewegungsvektors für eine nächste Bewegungsschätzung  ~15

# FIG 3

## FIG 4

N —— $\underbrace{\text{v signifikant?}}$ 151 —— Y    15

153 ~ | $S_i(\underline{v}) = S_i(\underline{v}) - \Delta S$ |    | $S(\underline{v}) = S_{max}$ | ~ 152

## FIG 5

| Auswahl von Testvektoren ($\underline{t1}$, ..., $\underline{tn}$) | ~ 21 |

| Ermitteln von Abstandsmaßen (D1, ..., Dn) zu den Testvektoren ($\underline{t1}$, ..., $\underline{tn}$) | ~ 22 |

| Ermitteln modifizierter Abstandsmaße (D'1, ..., D'n) abhängig von den Abstandsmaßen (D1, ..., Dn) und abhängig von Längen der Testvektoren | ~ 23 |

| Auswahl eines der Testvektoren ($\underline{t1}$, ..., $\underline{tn}$) als Bewegungsvektor ($\underline{v}$) abhängig von den modifizierten Abstandsmaßen (D'1, ..., D'n) | ~ 24 |

**Europäisches Patentamt**
**European Patent Office**
**Office européen des brevets**

## EUROPÄISCHER RECHERCHENBERICHT

**Nummer der Anmeldung**

EP 08 01 8113

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2004/111939 A (MICRONAS GMBH [DE]; HAHN MARKO [DE]; TUSCHEN CHRISTIAN [DE]) 23. Dezember 2004 (2004-12-23) * Seite 15, Zeile 22 - Seite 24, Zeile 3; Abbildungen 3-6 * ----- | 1-13 | INV. H04N7/26 |
| Y | US 2004/190624 A1 (KONDO TETSUJIRO [JP] ET AL) 30. September 2004 (2004-09-30) * Abbildungen 3,12,18-20,25-28,31,43 * * Absätze [0108] - [0112], [0178] - [0252] * ----- | 1-13 | |
| A | US 2003/189980 A1 (DVIR IRA [IL] ET AL) 9. Oktober 2003 (2003-10-09) * Absätze [0131] - [0146]; Abbildungen 1-3 * ----- | 1-13 | |
| D,A | EP 0 415 491 A (PHILIPS NV [NL] PHILIPS ELECTRONICS NV [NL]) 6. März 1991 (1991-03-06) * das ganze Dokument * ----- | 1-13 | |
| D,A | WO 02/087210 A (KONINKL PHILIPS ELECTRONICS NV [NL]) 31. Oktober 2002 (2002-10-31) * das ganze Dokument * ----- | 1-13 | RECHERCHIERTE SACHGEBIETE (IPC) H04N |
| D,A | US 4 853 775 A (ROUVRAIS BERNARD [FR] ET AL) 1. August 1989 (1989-08-01) * das ganze Dokument * ----- | 1-13 | |

Der vorliegende Recherchenbericht wurde für alle Patentansprüche erstellt

| Recherchenort | Abschlußdatum der Recherche | Prüfer |
|---|---|---|
| München | 20. Februar 2009 | Kuhn, Peter |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 01 8113

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-02-2009

| Im Recherchenbericht angeführtes Patentdokument | | Datum der Veröffentlichung | Mitglied(er) der Patentfamilie | | Datum der Veröffentlichung |
|---|---|---|---|---|---|
| WO 2004111939 | A | 23-12-2004 | DE | 10327577 A1 | 13-01-2005 |
| | | | EP | 1634245 A2 | 15-03-2006 |
| | | | US | 2007098279 A1 | 03-05-2007 |
| US 2004190624 | A1 | 30-09-2004 | JP | 4003128 B2 | 07-11-2007 |
| | | | JP | 2004207802 A | 22-07-2004 |
| | | | US | 2008008245 A1 | 10-01-2008 |
| US 2003189980 | A1 | 09-10-2003 | KEINE | | |
| EP 0415491 | A | 06-03-1991 | DE | 69026557 D1 | 23-05-1996 |
| | | | DE | 69026557 T2 | 31-10-1996 |
| | | | JP | 3092979 A | 18-04-1991 |
| | | | JP | 3147893 B2 | 19-03-2001 |
| | | | US | 5072293 A | 10-12-1991 |
| WO 02087210 | A | 31-10-2002 | CN | 1582579 A | 16-02-2005 |
| | | | EP | 1393572 A2 | 03-03-2004 |
| | | | JP | 2004530367 T | 30-09-2004 |
| | | | US | 2004071215 A1 | 15-04-2004 |
| US 4853775 | A | 01-08-1989 | CA | 1329649 C | 17-05-1994 |
| | | | DE | 3870969 D1 | 17-06-1992 |
| | | | EP | 0286483 A1 | 12-10-1988 |
| | | | FR | 2624682 A2 | 16-06-1989 |
| | | | JP | 1013882 A | 18-01-1989 |
| | | | JP | 2803818 B2 | 24-09-1998 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4853775 A, Rouvrais
- US 5072293 A, de Haan
- US 6782054 B2, Bellers

**In der Beschreibung aufgeführte Nicht-Patentliteratur**

- **SCHRÖDER, H. ; BLUME, H.** *Mehrdimensionale Signalverarbeitung,* vol. 2, 259-266